# EUROPÄISCHE PATENTANMELDUNG

(11) **EP 4 631 778 A1**
(43) Veröffentlichungstag der Anmeldung: **15.10.2025**
(21) Anmeldenummer: 25166071.8
(22) Anmeldetag: 25.03.2025
(51) Int. Cl.: B60N 2/00

(54) **SYSTEM ZUR DETEKTION EINER SITZHALTUNG EINES INSASSEN IN EINEM FAHRZEUGSITZ**

(30) Priorität: 27.03.2024 DE 102024108785
(71) Anmelder: GRAMMER AG, 92289 Ursensollen (DE)
(72) Erfinder: RÖMER, Michael, 90518 Altdorf (DE); SCHNEIDER, Florian, 92224 Amberg (DE)
(74) Vertreter: Hannke, Christian

(57) **Zusammenfassung**

Die Erfindung betrifft ein System zur Detektion einer Sitzhaltung eines Insassen in einem Fahrzeugsitz, umfassend einen Fahrzeugsitz mit einem eine Sitzfläche umfassenden Sitzteil und einer Rückenlehne, wobei zumindest eine erste Sensoreinrichtung vorgesehen ist, welche zumindest zwei in dem Sitzteil angeordnete Sensoren umfasst, wobei zumindest eine Steuerungseinrichtung dazu bestimmt und eingerichtet ist, Ausgabesignale der zumindest zwei Sensoren hinsichtlich einer asymmetrischen, durch einen Insassen wirkenden Sitzdruckverteilung auf der Sitzfläche auszuwerten.

## Beschreibung

Die Erfindung betrifft ein System zur Detektion einer Sitzhaltung eines Insassen in einem Fahrzeugsitz, umfassend einen Fahrzeugsitz mit einem eine Sitzfläche umfassenden Sitzteil und einer Rückenlehne.

Insbesondere bei Nutzfahrzeugen ist die Verweildauer eines Insassen oftmals besonders lang. Eine ungünstige Sitzhaltung eines Insassen in dem Fahrzeugsitz kann nachteilige gesundheitliche Auswirkungen für den Insassen nach sich ziehen. Eine solche ungünstige Sitzhaltung kann beispielsweise durch Fahreinflüsse des Untergrunds, wie beispielsweise Stöße und Schwingungen, zu potenziell schädlichen Auswirkungen auf die Wirbelsäule führen. Derartige Beeinträchtigungen können zu erhöhten Ausfällen des Fahrers führen und damit wirtschaftliche Auswirkungen nach sich ziehen. Die ungünstige Sitzhaltung beispielsweise bedingt sein durch unergonomische Sitzeinstellungen und/oder durch eine ungünstige Einstellung der Armlehne des Fahrzeugsitzes bedingt sein. Oftmals ist dem Insassen gar nicht bewusst, dass dieser eine ungünstige Sitzhaltung in dem Fahrzeugsitz einnimmt.

Aufgabe der vorliegenden Erfindung ist es ein System bereitzustellen, welche die zuvor angeführten Nachteile überwindet.

Die Aufgabe wird durch den Gegenstand des unabhängigen Anspruchs1 gelöst. Vorteilhafte Ausgestaltungen sind den Unteransprüchen zu entnehmen.

Kerngedanke der Erfindung ist ein System zur Detektion einer Sitzhaltung eines Insassen in einem Fahrzeugsitz, umfassend einen Fahrzeugsitz mit einem eine Sitzfläche umfassenden Sitzteil und einer Rückenlehne, wobei zumindest eine erste Sensoreinrichtung vorgesehen ist, welche zumindest zwei in dem Sitzteil angeordnete Sensoren umfasst, wobei zumindest eine Steuerungseinrichtung dazu bestimmt und eingerichtet ist, Ausgabesignale der zumindest zwei Sensoren hinsichtlich einer durch einen Insassen wirkenden Sitzdruckverteilung auf der Sitzfläche auszuwerten.

Die Sitzdruckverteilung auf der Sitzfläche spiegelt die Sitzhaltung eines Insassen in den Fahrzeugsitz wider. Vorteilhafterweise ist die Steuerungseinrichtung dazu bestimmt und eingerichtet, Ausgabesignale der zumindest zwei Sensoren hinsichtlich einer asymmetrischen, durch einen Insassen wirkenden Sitzdruckverteilung auf der Sitzfläche auszuwerten. Eine gerade, symmetrische Sitzhaltung hat in der Regel eine symmetrische sitzt Druckverteilung auf der Sitzfläche des Sitzteils zur Folge. Eine asymmetrische Schildsitzhaltung hat in der Regel eine asymmetrische Sitzdruckverteilung auf der Sitzfläche des Sitzes zufolge. Durch das erfindungsgemäße System kann die Sitzhaltung des Insassen somit auf eine einfache Art und Weise detektiert werden. So kann eine asymmetrische Sitzhaltung, welche insbesondere bei längerem Sitzen oder auch durch Übertragung von Stößen oder Schwingungen auf den Insassen negative Folgen für diesen haben können, festgestellt werden.

Nach einer bevorzugten Ausführungsform ist eine Steuerungseinrichtung in dem Fahrzeugsitz integriert. Es wäre jedoch auch denkbar, dass eine Steuerungseinrichtung lediglich in dem Fahrzeug integriert ist. Denkbar wäre auch, dass eine Steuerungseinrichtung dem Fahrzeugsitz vorgesehen ist und eine weitere Steuerungseinrichtung im Fahrzeug vorgesehen ist, und dass sich die genannten Steuerungseinrichtungen vorbestimmte Aufgaben durchführen. Vorteilhafterweise ist die zumindest eine Steuerungseinrichtung mit der zumindest einen Sensoreinrichtung signaltechnisch verbunden.

Vorteilhafterweise ist das System dazu bestimmt und eingerichtet eine Meldung bezüglich einer Sitzhaltung eines Insassen in einem Fahrzeugsitz bereitzustellen. Demnach umfasst nach einer bevorzugten Ausführungsform das System eine Ausgabeeinrichtung, welche eine Ausgabe bezüglich der Sitzhaltung eines Insassen des Fahrzeugsitzes bereitstellt. Vorzugsweise ist die Ausgabe eine visuelle Ausgabe und/oder eine akustische Ausgabe und/oder eine haptische Ausgabe. Vorteilhafterweise ist die zumindest eine Steuerungseinrichtung mit der zumindest einen Ausgabeeinrichtung signaltechnisch verbunden. Durch die Ausgabeeinrichtung kann ein Insasse auf seine ungünstige Sitzhaltung aufmerksam gemacht werden. Dieser kann dann seine Sitzhaltung entsprechend korrigieren.

Vorteilhafterweise umfasst die Ausgabeeinrichtung eine Anzeigeeinrichtung, beispielsweise eine LED-Anzeige, eine grafische Darstellung in einem Displayelement oder beliebig anderweitig ausgebildetes visuelles Anzeigeelement. Die Anzeigeeinrichtung kann vorteilhafterweise derart platziert sein, dass der Insasse des Fahrzeugsitzes bei normalen Gebrauch des Fahrzeugsitzes diese im Blick hat. Bevorzugt kann die Anzeigeeinrichtung in dem Interior des Fahrzeugs, beispielsweise im Armaturenbrett, und/oder an dem Fahrzeugsitz, beispielsweise an der Armlehne, angeordnet sein.

Nach einer weiteren bevorzugten Ausführungsform sind die zumindest zwei Sensoren Drucckraftsensoren. Vorzugsweise ändert sich bei einer Änderung einer auf den Sensor wirkenden Druckkraft ein elektrischer Parameter des Sensors. Das Ausgabesignal der zumindest zwei Sensoren ist proportional zu dieser Änderung. Dieses Ausgabesignal wird dann von der zumindest einen Steuerungseinrichtung ausgewertet. Vorteilhafterweise umfasst die Auswertung der zumindest einen Steuerungseinrichtung einen Vergleich der Ausgabesignale der zumindest zwei Sensoren unter Bezugnahme der Position des jeweiligen Sensors in der Sitzfläche. Vorteilhafterweise ist der elektrische Parameter ein elektrischer Widerstand und/oder eine Kapazität und/oder eine Induktivität.

Nach einer weiteren bevorzugten Ausführungsform sind die zumindest zwei Sensoren in einem Mattenelement integriert. Ein solches Mattenelement stellt eine besonders kompakte Bauweise dar, welche es ermöglich dieses in beliebigen Sitzformen zu integrieren. Das Mattenelement kann beispielsweise in einem Polsterelement des Sitzteils integriert sein. Denkbar wäre auch, dass das Mattenelement zwischen einem Polsterelement und einem Sitzbezug des Sitzteils angeordnet ist. Selbstverständlich können auch noch weitere Schichten oder Elemente zwischen dem Mattenelement und dem Polsterelement und/oder zwischen dem Mattenelement und dem Sitzbezug angeordnet sein. Nach einer weiteren bevorzugten Ausführungsform sind die zumindest zwei Sensoren in einem Polsterelement des Sitzteils integriert.

Nach einer weiteren bevorzugten Ausführungsform umfasst der Fahrzeugsitz zumindest eine Armlehne. Bei Nutzfahrzeugen wird die Armlehne eines Fahrersitzes vorteilhafterweise dazu genutzt, dass Bedienelemente oder Anzeigeelemente in dieser angeordnet sind. Vorzugsweise ist die Ausgabeeinrichtung in der bevorzugten Form einer Anzeigeeinrichtung in einer solchen Armlehne integriert. Vorteilhafterweise die zumindest eine Sensoreinrichtung zumindest einen Sensor, welcher die Höhe der zumindest einen Armlehne bestimmt. Die Höhe der Armlehne kann die Sitzhaltung beeinflussen. Ist beispielsweise die Armlehne zu niedrig eingestellt, kann dies eine asymmetrische Sitzhaltung begünstigen. Mit dem Ausgabesignal des Sensors bezüglich der Höhe der Armlehne kann die Steuerungseinrichtung bestimmen, ob bei Vorliegen einer ungünstigen Sitzhaltung eine Anpassung der Höhe der Armlehne günstig ist. Ist dies der Fall, kann dem Nutzer, mittels Ausgabeeinrichtung, eine entsprechende Ausgabe präsentiert werden, dass eine Einstellung der Höhe der Armlehne günstig wäre.

Nach einer bevorzugten Ausführungsform ist eine Eingabeeinrichtung vorgesehen, mittels welcher Nutzerdaten, beispielsweise die Größe, das Gewicht etc. des Insassen, eingegeben werden können. Derartige Nutzerdaten können dann vorzugsweise in einer Speichereinrichtung abgelegt werden. Dabei ist es vorstellbar, dass in der Speichereinrichtung ein permanentes Nutzerprofil hinterlegt ist, welches durch den Insassen aktivierbar ist. Dieses Nutzerprofil stellt der Steuerungseinrichtung die Nutzerdaten zur Verfügung oder kann auch bestimmte bevorzugte Einstellungen des Fahrersitzes der Steuerungseinrichtung zur Verfügung stellen.

Nach einer weiteren bevorzugten Ausführungsform umfasst die zumindest eine Sensoreinrichtung zumindest einen Sensor, welcher in der Rückenlehne angeordnet ist. Das Ausgabesignal dieses zumindest einen weiteren Sensors kann in die Auswertung bezüglich der Sitzhaltung einfließen. Es kann somit ein genaueres Bild der Sitzhaltung des Insassen durch die Steuerungseinrichtung generiert werden.

Nach einer weiteren bevorzugten Ausführungsform steuert die zumindest eine Steuerungseinrichtung nach Detektion einer asymmetrischen Sitzhaltung zumindest einen Aktuator an. Die Steuerungseinrichtung steuert den zumindest einen Aktuator derart an, dass die Sitzhaltung des Insassen verbessert wird. Denkbar wäre, dass der zumindest eine Aktuator die Höhe der zumindest einen Armlehne verändert. Alternativ oder kumulativ könnte der zumindest eine Aktuator eine Neigung der Rückenlehne und/oder des gesamten Fahrzeugsitzes verändern. Alternativ oder kumulativ könnte der zumindest eine Aktuator eine Veränderung einer Seitenkontur des Sitzteils bewirken.

Vorteilhafterweise kann somit nach Detektion einer asymmetrischen Sitzdruckverteilung beziehungsweise einer asymmetrischen Sitzhaltung des Insassen die ergonomischen Sitzeinstellungen automatisch derart modifiziert werden, dass die Sitzhaltung verbessert wird, beziehungsweise hin zu einer symmetrischen Sitzhaltung verändert wird.

Nach einer weiteren bevorzugten Ausführungsform ist das System dazu bestimmt und eingerichtet, eine Belegung des Fahrzeugsitzes zu erkennen. Vorzugsweise gibt die Steuerungseinrichtung ein Sitzbelegungssignal aus, wenn ein Ausgabesignal zumindest eines der in dem Sitzteil angeordneten Sensoren einen Schwellwert übersteigt oder unterschreitet. Bei der vorteilhaften Auswertung hinsichtlich einer Sitzbelegung wird somit vorzugsweise lediglich ein binäres Signal (Sitz belegt oder Sitz nicht belegt) ausgegeben. Bei der Feststellung der asymmetrischen Sitzdruckverteilung werden vorzugsweise kontinuierliche Werte ausgegeben, welche von der Steuerungseinrichtung ausgewertet werden können. Die Steuerungseinrichtung kann vorteilhafterweise nach Erkennung einer Sitzbelegung bestimmte Funktionen des Fahrzeugs freigeben. Dies kann beispielsweise eine Freigabe einer Airbagfunktion oder anderweitige Funktionen sein.

Nach einer weiteren bevorzugten Ausführungsform ist eine zweite Sensoreinrichtung vorgesehen, mittels welcher die Neigung des Fahrzeugs bestimmbar ist. Vorteilhafterweise erfolgt bei Überschreiten eines vorbestimmten Schwellwerts bezüglich der Neigung des Fahrzeugs keine Ausgabe hinsichtlich einer asymmetrischen Sitzhaltung. Insbesondere bei Nutzfahrzeugen auf unebenen Terrain kann die Neigung des Fahrzeugs erheblich sein. Eine solche Neigung des Fahrzeugs hat eine asymmetrische Sitzhaltung zur Folge. Eine Detektion einer asymmetrischen Sitzhaltung ist bei einer solchen Neigung jedoch nicht zielführend, da diese zum einen vorübergehend ist und zum anderen weder durch Sitzeinstellungen noch durch Änderung der Sitzhaltung vernünftigerweise änderbar ist.

Nach einer weiteren bevorzugten Ausführungsform weist das Sitzteil eine Erstreckung entlang einer Breitenachse (Y) auf. Vorzugsweise sind die zumindest zwei Sensoren derart angeordnet, dass diese einen vorbestimmten Abstand entlang der Breitenachse aufweisen. Eine asymmetrische Sitzdruckverteilung beziehungsweise eine asymmetrische Sitzhaltung entlang der Breitenachse (Y) hat einen besonders negativen Einfluss auf die Wirbelsäule. Ein Ausgleich einer sogenannten Rechts-Links-Asymmetrie ist demnach besonders vorteilhaft. Durch die Verteilung der zumindest zwei Sensoren entlang der Breitenachse (Y) wird ein Vergleich zwischen zumindest einem weiter links angeordneten und zumindest einem weiter rechts angeordneten Sensor ermöglicht. Hierdurch kann ein Ausgleich der Rechts-Links-Asymmetrie besonders einfach festgestellt werden.

Nach einer weiteren bevorzugten Ausführungsform weist das Sitzteil entlang einer Breitenachse (Y) eine erste Mittelachse auf. Vorzugsweise ist eine erste Teilmenge an Sensoren der ersten Sensoreinrichtung auf einer ersten Seite der ersten Mittelachse angeordnet ist. Weiterhin ist es von Vorteil, dass eine zweite Teilmenge an Sensoren der ersten Sensoreinrichtung auf einer zweiten Seite der ersten Mittelachse angeordnet ist. Vorzugsweise sind die erste Teilmenge und die zweite Teilmenge symmetrisch bezüglich der ersten Mittelachse angeordnet. Die erste Teilmenge an Sensoren kann dabei zumindest einen Sensor oder mehrere Sensoren umfassen. Ebenso kann die zweite Teilmenge zumindest einen Sensor oder mehrere Sensoren umfassen. Durch die vorteilhafte symmetrische Anordnung der ersten und zweiten Teilmengen gegenüber der einer Mittelachse kann eine Asymmetrie in der Sitzdruckverteilung hinsichtlich der Breitenachse (Y) besonders einfach detektiert werden.

Nach einer weiteren bevorzugten Ausführungsform weist das Sitzteil eine Erstreckung entlang einer Längsachse (X) auf. Vorzugsweise sind die zumindest zwei Sensoren derart angeordnet, dass diese einen vorbestimmten Abstand entlang der Längsachse (X) aufweisen. Gemäß einer derartigen Ausführungsform ist eine asymmetrische Sitzdruckverteilung beziehungsweise eine asymmetrische Sitzhaltung entlang der Längsachse (X) detektierbar.

Denkbar wäre, dass zumindest vier Sensoren vorgesehen sind. Vorzugsweise weisen zumindest zwei Sensoren einen vorbestimmten Abstand entlang der Längsachse (X) und zumindest zwei Sensoren einen vorbestimmten Abstand entlang der Breitenachse (Y) auf. Nach einer solchen Ausführungsform ist eine asymmetrische Sitzdruckverteilung beziehungsweise eine asymmetrische Sitzhaltung entlang der Längsachse (X) und entlang der Breitenachse (Y) detektierbar.

Nach einer weiteren bevorzugten Ausführungsform weist das Sitzteil entlang einer Längsachse (X) eine zweite Mittelachse auf. Vorzugsweise ist eine dritte Teilmenge an Sensoren der ersten Sensoreinrichtung auf einer ersten Seite der zweiten Mittelachse angeordnet. Bevorzugt ist eine vierte Teilmenge an Sensoren der ersten Sensoreinrichtung auf einer zweiten Seite der zweiten Mittelachse angeordnet ist. Vorteilhafterweise sind die dritte Teilmenge und die vierte Teilmenge symmetrisch bezüglich der zweiten Mittelachse angeordnet.

Nach einer weiteren bevorzugten Ausführungsform weisen die erste Teilmenge und die dritte Teilmenge zumindest einen gemeinsamen Sensor auf. Vorzugsweise weisen die erste Teilmenge und die vierte Teilmenge zumindest einen gemeinsamen Sensor auf. Vorzugsweise weisen die zweite Teilmenge und die dritte Teilmenge zumindest einen gemeinsamen Sensor auf. Vorzugsweise weisen die zweite Teilmenge und die vierte Teilmenge zumindest einen gemeinsamen Sensor auf. Demnach sind bevorzugt die erste Teilmenge und die dritte Teilmenge und/oder die vierte Teilmenge nicht disjunkt. Bevorzugt sind die zweite Teilmenge und die dritte Teilmenge und/oder die vierte Teilmenge nicht disjunkt.

Die Aufgabe wird weiterhin von einem Fahrzeug insbesondere ein Nutzfahrzeug mit einem System nach einem der vorhergehend beschriebenen Ausführungsformen gelöst. Das Fahrzeug insbesondere Nutzfahrzeug kann dabei mit allen bereits obig im Rahmen des Systems beschriebenen Merkmalen einzeln oder in Kombination miteinander ausgestattet sein und umgekehrt.

Die Aufgabe wird weiterhin von einem Verfahren zum Betreiben eines Fahrzeugs insbesondere eines Nutzfahrzeugs mit einem System nach einem der vorhergehend beschriebenen Ausführungsformen gelöst. Das Verfahren kann dabei mit allen bereits obig im Rahmen des Systems beschriebenen Merkmalen einzeln oder in Kombination miteinander ausgestattet sein und umgekehrt.

Weitere Vorteile, Ziele und Eigenschaften der vorliegenden Erfindung werden anhand nach-folgender Beschreibung der anliegenden Figuren erläutert. Gleichartige Komponenten können in den verschiedenen Ausführungsformen gleiche Bezugszeichen aufweisen.

In den Figuren zeigen:
- Fig. 1a: ein System zur Detektion einer Sitzhaltung eines Insassen 15 in einem Fahrzeugsitz;
- Fig. 1b: ein System zur Detektion einer Sitzhaltung eines Insassen 15 in einem Fahrzeugsitz;
- Fig. 2: ein System zur Detektion einer Sitzhaltung eines Insassen 15 in einem Fahrzeugsitz;
- Fig. 3: ein Sitzteil nach einer Ausführungsform;
- Fig. 4: ein Sitzteil nach einer Ausführungsform;
- Fig. 5a: eine Ausgabeeinrichtung nach einer Ausführungsform;
- Fig. 5b: eine Ausgabeeinrichtung bei verschiedenen Sitzhaltungen;
- Fig. 6: ein Sitzteil nach einer Ausführungsform;
- Fig. 7: Schaltung eines Sensorkreises nach einer weiteren Ausführungsform;
- Fig. 8: ein Sitzteil nach einer Ausführungsform;
- Fig. 9: Schaltung eines Sensorkreises nach einer weiteren Ausführungsform;
- Fig. 10: ein Ablaufdiagramm eines Verfahrens zum Betreiben eines Fahrzeugs nach einer weiteren Ausführungsform;
- Fig. 11: ein Ablaufdiagramm eines Verfahrens zum Betreiben eines Fahrzeugs nach einer weiteren Ausführungsform.

Die 1a, 1b und 2 zeigen ein System 1 zur Detektion einer Sitzhaltung eines Insassen 15 in einem Fahrzeugsitz 2, umfassend einen Fahrzeugsitz 2 mit einem eine Sitzfläche 3 umfassenden Sitzteil 4 und einer Rückenlehne 5, wobei zumindest eine Sensoreinrichtung 6 vorgesehen ist, welche zumindest zwei in dem Sitzteil 7 angeordnete Sensoren 6a, 6b umfasst, wobei zumindest eine erste Steuerungseinrichtung 8 dazu bestimmt und eingerichtet ist, Ausgabesignale der zumindest zwei Sensoren 6a, 6b hinsichtlich einer asymmetrischen, durch einen Insassen 15 wirkenden Sitzdruckverteilung auf der Sitzfläche 3 auszuwerten.

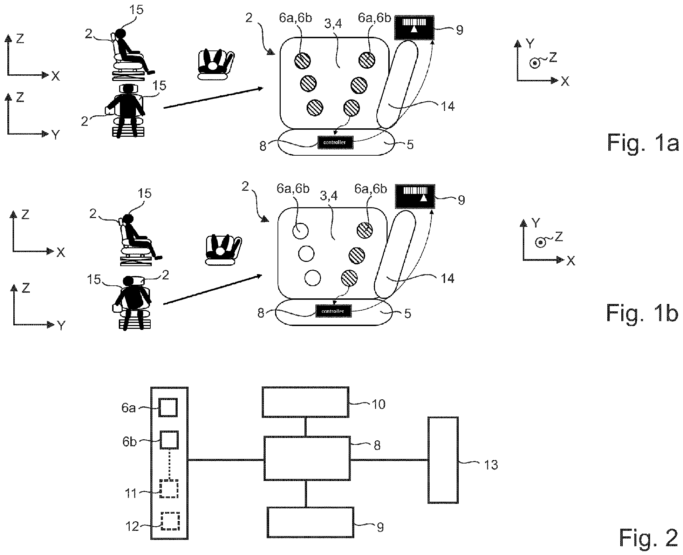

In Figur 1a ist ein Beispiel für eine symmetrische Sitzhaltung gezeigt. Weiterhin ist in Figur 1b ein Beispiel für eine asymmetrische Sitzhaltung gezeigt. Der Insasse 15 in Figur 1a sitzt gerade in dem Fahrzeugsitz 2, wohingegen der Insasse 15 in Figur 1b mit einer nach rechts geknickten, asymmetrischen Sitzhaltung, in dem Fahrzeugsitz 2 sitzt. Eine Ursache für eine solche asymmetrische Sitzhaltung kann beispielsweise eine Armlehne 14 mit einer zu geringen Höhe sein. Dies ist in Figur 1b gut ersichtlich. Asymmetrische Sitzhaltungen können jedoch selbstverständlich weitere Ursachen haben.

Eine asymmetrische Sitzhaltung hat eine asymmetrische Sitzdruckverteilung auf der Sitzfläche 4 des Sitzteils 3 zur Folge Ebenso hat eine symmetrische Sitzhaltung eine symmetrische Sitzdruckverteilung auf der Sitzfläche 4 des Sitzteils 3 zur Folge. Die Figuren 1a, 1b zeigen hierzu eine Draufsicht auf einen Fahrzeugsitz 2 mit einem Sitzteil 4, in welchen zumindest zwei 6a, 6b Sensoren, vorliegend sechs Sensoren 6a, 6b verteilt angeordnet sind. Dabei sind in den Figuren 1a, 1b die belegten Sensoren 6a, 6b als Kreis mit Schraffur dargestellt. Die nicht oder weniger belegten Sensoren 6a, 6b sind als Kreis dargestellt. In Figur 1a sind alle sechs Sensoren 6a, 6b im Wesentlichen gleichartig belegt. Mit im Wesentlichen soll eine Sitzbelegung, beziehungsweise eine auf den Sensor 6a, 6b wirkende Druckkraft innerhalb einer vorbestimmten Toleranzabweichung gemeint sein. Durch die asymmetrische Sitzhaltung, beziehungsweise die geneigte Haltung zu Armlehne 14 hin, in Figur 1b, sind diejenigen Sensoren 6a, 6b, welche näher an der Armlehne 14 liegen stärker belastet, während diejenigen Sensoren 6a, 6b welche weiter weg von der Armlehne liegen wenig belastet sind.

Das System 1 wertet nun, mittels zumindest einer Steuerungseinrichtung 8 die Ausgabesignale der zumindest zwei Sensoren 6a, 6b hinsichtlich einer asymmetrischen Sitzdruckverteilung auf der Sitzfläche 4 aus.

Die zumindest zwei Sensoren 6a, 6b sind Druckkraftsensoren. Bei einer Änderung einer auf den Sensor 6a, 6b wirkenden Druckkraft ändert sich ein elektrischer Parameter des Sensors 6a, 6b. Das Ausgabesignal der zumindest zwei Sensoren 6a, 6b ist proportional zu dieser Änderung. Der elektrische Parameter kann ein elektrischer Widerstand und/oder eine Kapazität und/oder eine Induktivität sein. Denkbar wäre auch eine Kombination elektrischer Parameter, beispielsweise ein elektrischer Parameter in Form eines Widerstands mi einem elektrischen Parameter einer anders gearteten Sensorik, welche beispielsweise eine Kapazität bestimmt.

Es kann eine Ausgabeeinrichtung 9 vorgesehen sein, welche nach Detektion einer asymmetrischen Sitzdruckverteilung dem Insassen einen entsprechenden Hinweis bezüglich einer ungünstigen Sitzhaltung ausgibt. Diese Ausgabe kann eine visuelle Ausgabe und/oder eine akustische Ausgabe und/oder eine haptische Ausgabe sein. Eine Ausgabeeinrichtung 9 in Form einer Anzeigeeinrichtung stellt eine visuelle Ausgabe bereit. Eine solche Anzeigeeinrichtung kann beispielsweise eine LED-Anzeige ein Display oder Ähnliches sein. Diese Anzeigeeinrichtung kann im Fahrzeug oder am Fahrzeugsitz 2, beispielsweise an der Armlehne 14 angeordnet sein. Dies ist in Figur 1b gezeigt.

Der Fahrzeugsitz erstreckt sich entlang einer Längsachse X. Entlang der Längsachse X schließt die Rückenlehne 5 an das Sitzteil 3 an. Weiterhin erstreckt sich der Fahrzeugsitz 2 entlang einer Breitenachse Y. An beziehungsweise über entlang der Breitenachse Y äußeren Rand des Sitzteils ist zumindest eine Armlehne 14 angeordnet. Weiterhin erstreckt sich der Fahrzeugsitz 2 entlang einer Höhenachse Z. Die Rückenlehne 5 erstreckt sich ausgehend von dem Sitzteil 4 entlang der Höhenachse Z.

Die zumindest zwei Sensoren 6a, 6b können in einem Mattenelement (nicht in den Figuren gezeigt) integriert sein. Ein solches Mattenelement kann auf einfache Weise innerhalb des Sitzteils 4 angeordnet werden.

Denkbar wäre, dass das System 1 weitere Sensoren umfasst, welche hinsichtlich der Bestimmung einer asymmetrischen Sitzhaltung hilfreich sind. So kann die zumindest eine erste Sensoreinrichtung 6 zumindest einen Sensor 11 umfassen, welcher die Höhe der zumindest einen Armlehne 14 bestimmt. Denkbar wäre auch, dass die zumindest eine erste Sensoreinrichtung 6 zumindest einen Sensor 11 umfasst, welcher in der Rückenlehne 5 angeordnet ist.

Weiterhin ist es denkbar, dass zumindest ein Aktuator 10 vorgesehen ist. Nach Detektion einer asymmetrischen Sitzhaltung, kann die zumindest eine Steuerungseinrichtung 8 zumindest einen Aktuator 10 derart ansteuern, dass die Sitzhaltung des Insassen verbessert wird. Solche Aktoren können beispielsweise die Höhe der Armlehne und/oder eine Neigung der Rückenlehne und/oder eine Neigung des Fahrzeugsitzes und/oder eine Seitenkontur modifizieren.

Dabei können die Ausgabesignale der weiteren Sensoren 11, 12 Verwendung finden, um eine optimale Einstellung des Fahrzeugsitzes zu finden. Denkbar wäre auch eine entsprechende Regelung durch die Steuerungseinrichtung 8 hin zu einer optimalen Einstellung der Sitzparameter. Eine solche Modifikation kann automatisch nach Detektion einer asymmetrischen Sitzhaltung erfolgen. Denkbar wäre jedoch auch, dass zunächst eine Nutzerabfrage hinsichtlich einer möglichen Modifikation eines Sitzparameters, beispielsweise der Höhe der Armlehne 14, präsentiert wird. Die Präsentation der Nutzerabfrage kann durch die Ausgabeeinrichtung 9 erfolgen. Der Insasse 15 kann mittels einer Eingabe die vorgeschlagene automatische Einstellung freigeben oder modifizieren. Die Eingabe erfolgt mittels einer Eingabeeinrichtung, welche in der Ausgabeeinrichtung 9 integriert sein kann oder eine separate Einrichtung ist.

Nach einer Ausführungsform ist eine zweite Sensoreinrichtung 13 vorgesehen, welche im Fahrzeug oder aber auch im Fahrzeugsitz 2 angeordnet sein kann. Mittels der zweiten Sensoreinrichtung 13 ist die Neigung des Fahrzeugs bestimmbar. Bei Überschreiten eines Schwellwerts bezüglich der Neigung des Fahrzeugs erfolgt keine Ausgabe hinsichtlich einer asymmetrischen Sitzhaltung. Neigt sich das Fahrzeug folgt daraus automatisch eine asymmetrische Sitzdruckverteilung, welche jedoch nicht aus einer asymmetrischen Sitzhaltung folgt, sondern aus der Neigung des Sitzes des Fahrzeugs. Eine entsprechende Anzeige für die asymmetrische Sitzhaltung kann bei einer bei Überschreiten des Schwellwerts deaktiviert werden. Denkbar wäre auch, dass die Auswertung an sich in einem solchen Fall deaktiviert ist.

Figur 2 zeigt ein entsprechendes Prinzipschaltbild. Die Steuerungseinrichtung 8 ist signaltechnisch mit der ersten Sensoreinrichtung 6 und der Ausgabeeinrichtung 9 verbunden. Weiterhin ist die Steuerungseinrichtung 8 mit der optionalen zweiten Sensoreinrichtung 13 und dem optionalen zumindest einen Aktor 10 signaltechnisch verbunden. Die Steuerungseinrichtung 8 kann im Fahrzeugsitz 2 oder im Fahrzeug angeordnet sein: Denkbar wäre auch das sowohl im Fahrzeugsitz 2 als auch im Fahrzeug eine Steuerungseinrichtung 8 vorgesehen ist, wobei die beiden eine Steuerungseinrichtung 8 miteinander kommunizieren.

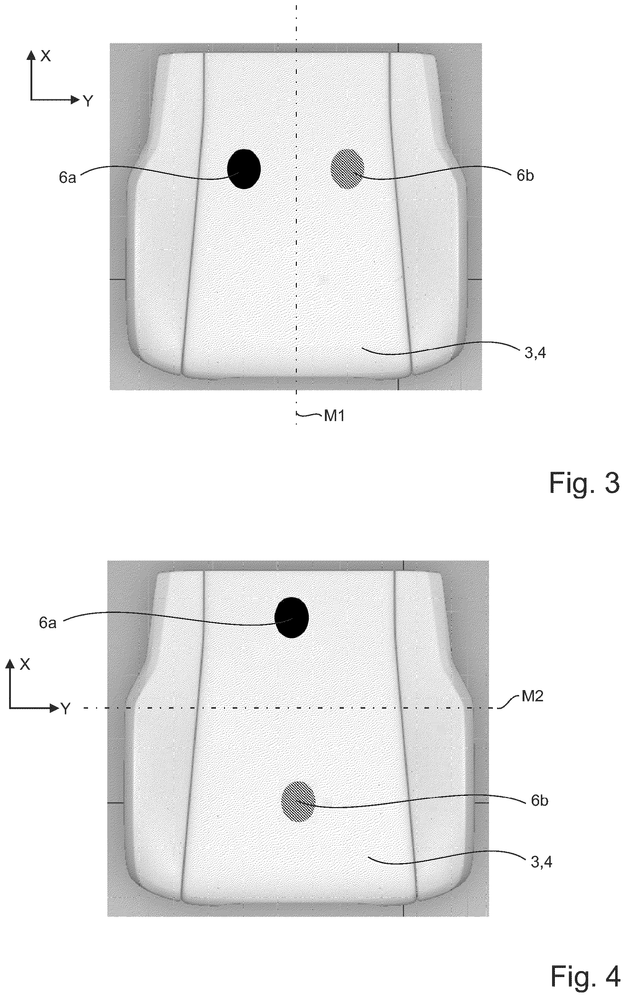

In Figur 3 ist ein Sitzteil 2 mit einer Sitzfläche 4 in einer beispielhaften Ausführungsform mit zwei Sensoren 6a, 6b gezeigt. Die Positionierung der Sensoren 6a, 6b entspricht der Positionierung von Sitzbeinhöckern des Insassen 15 nach 50. Perzentil männlich. Die Sensoren 6a, 6b weisen einen vorbestimmten Abstand entlang der Breitenachse Y auf. Es kann eine erste Mittelachse M1 bezüglich der Breitenachse Y definiert werden. D.h. die erste Mittelachse M1 schneidet die Breitenachse Y mittig bezüglich der Breite des Sitzteils 3. Diese erste Mittelachse M1 fungiert als Symmetrieachse hinsichtlich der Anordnung der Sensoren 6a, 6b. Ein erster Sensor 6a weist somit einen gleichen Abstand zu der ersten Mittelachse M1 wie ein zweiter Sensor 6b zu der ersten Mittelachse M1 auf. Somit hat jeder der beiden Sensoren 6a, 6b einen definierten Abstand zu der ersten Mittelachse M1. Durch eine solche Anordnung zumindest zweier Sensoren 6a, 6b kann die sogenannte Links-Rechts-Asymmetrie detektiert werden. Sitzt der Insasse mehr auf der linken oder rechten Seite wird der jeweilige Sensor dieser Seite mehr belastet. Ein Vergleich der Ausgabesignale dieser beiden Sensoren 6a ,6b durch die Steuereinrichtung 8 liefert ein entsprechendes Signal, welches auf eine asymmetrische Sitzdruckverteilung hindeutet.

In Figur 4 ist eine weitere Ausführungsform dargestellt. Hier ist ebenso ein Sitzteil 2 mit einer Sitzfläche 4 dargestellt. Ebenso sind lediglich zwei Sensoren 6a, 6b vorgesehen. Diese haben jedoch einen vorbestimmten Abstand entlang der Längsachse X. Hier kann eine zweite Mittelachse M2 bezüglich der Längsachse X definiert werden. D.h. die zweite Mittelachse M2 schneidet die Längsachse X mittig bezüglich der Länge des Sitzteils 3. Analog zu der Ausgestaltung der Figur 3 weisen die beiden Sensoren 6a, 6b einen bestimmten Abstand zu der zweiten Mittelachse M2 auf und sind somit symmetrisch bezüglich der zweiten Mittelachse M2 angeordnet.

Ein erster Sensor 6a weist somit einen gleichen Abstand zu der zweiten Mittelachse M2 wie ein zweiter Sensor 6b zu der zweiten Mittelachse M2 auf. Somit hat jeder der beiden Sensoren 6a, 6b einen definierten Abstand zu der zweiten Mittelachse M2. Durch eine solche Anordnung zumindest zweier Sensoren 6a, 6b kann die sogenannte Vorne-Hinten-Asymmetrie detektiert werden.

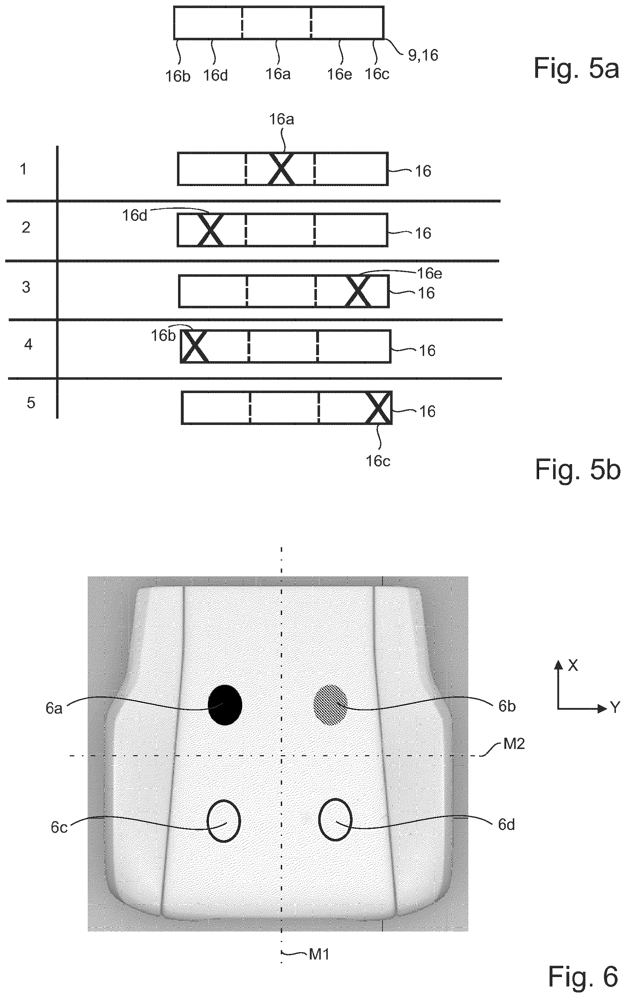

Die beiden Ausführungsformen aus den Figuren 3 und Figur 4 können auch kombiniert werden. Eine solche Ausführungsform ist in Figur 6 gezeigt. Hier sind vier Sensoren 6a, 6b 6c, 6d vorgesehen.

Der erste Sensor 6a ist entlang der der Breitenachse Y von dem zweiten Sensor 6b beabstandet. Der dritte Sensor 6c ist ebenso entlang der der Breitenachse Y von dem vierten Sensor beabstandet. Weiterhin ist der erste Sensor 6a entlang der Längsachse X von dem dritten Sensor 6c beabstandet. Der zweite Sensor 6b ist ebenso entlang der Längsachse X von dem vierten Sensor 6d beabstandet. Vorzugsweise liegt eine Symmetrie bezüglich der ersten Mittelachse vor. Die Sensoren 6a, 6b, 6c, 6d sind gemäß Figur 6 matrixartig angeordnet mit einer Symmetrie bezüglich der ersten Mittelachse M1 und einer Symmetrie bezüglich der zweiten Mittelachse M2

Der Abstand zwischen dem ersten Sensor 6a und dem zweiten Sensor 6b kann sich jedoch von dem Abstand zwischen dem dritten Sensor 6c und dem vierten Sensor 6d unterscheiden. Ein solche Ausgestaltung ist in den Figuren 1a und 1b dargestellt. Diese Verteilung der Sensoren entspricht einer natürlichen Sitzkontur. Die Abstände der entlang der Breitenachse Y gegenüberliegenden Sensoren 6a, 6b nimmt entlang der Längsachse zu der Rückenlehne 5 hin ab. Es existiert somit lediglich eine Symmetrie bezüglich der ersten Mittelachse M1

In Figur 5a ist ein Beispiel für eine Ausgabeeinrichtung 9 in Form einer visuellen Anzeigeeinrichtung dargestellt. Diese Anzeigeeinrichtung ist nur beispielhaft für eine mögliche Umsetzung und soll keine Beschränkung der Allgemeinheit darstellen. Die Anzeigeeinrichtung 16 weist einen mittleren Bereich 16a und zwei außenliegende Bereiche 16b, 16c auf. Zwischen dem mittleren Bereich 16a und den jeweiligen außenliegenden Bereichen 16b, 16c sind Übergangsbereiche 16d, 16e vorgesehen.

Bei der optimalen Sitzhaltung würde der Bereich 16a angezeigt werden. Je weiter die Asymmetrie der Sitzhaltung ausgeprägt ist, desto weiter würde die Anzeige in die jeweilige Richtung (links oder rechts) verschoben werden. Denkbar wäre, dass die genannten Bereiche eine Farbcodierung aufweisen. So könnte der mittlere Bereich 16a grün dargestellt sein. Die Übergansbereiche 16d, 16e in Orange. Diese Übergansbereiche 16d, 16e gehen zu den außenliegenden Bereichen in Rot über.

In Figur 5B ist eine beispielhafte Anzeige für verschiedene Sitzhaltungen bezüglich einer Ausführungsform nach Figur 3 dargestellt. Der erste Sensor gibt dabei ein erstes Ausgabesignal S1 aus. Der zweite Sensor 6b gibt ein zweites Ausgabesignal S2 aus. Die Steuerungseinrichtung 8 vergleicht die Ausgabesignale S1 und S2. Entsprechend dem Grad der Abweichungen des ersten Ausgabesignals S1 von dem zweiten Ausgabesignal S2 wird ein Übergangsbereich (links, rechts) oder ein außenliegender Bereich (links, rechts) angezeigt.

In Figur 5b sind 5 mögliche Anzeigen bezüglich der Sitzhaltung dargestellt. Dabei zeigt Spalte 1 eine optimale Sitzhaltung, Spalte 2 eine moderate Asymmetrie nach links, Spalte 3 eine moderate Asymmetrie nach rechts, Spalte 4 ist eine stark ausgebildete Asymmetrie nach links und Spalte 5 eine stark ausgebildete Asymmetrie nach rechts an. In der folgenden Tabelle sind beispielhafte Werte für mögliche konkrete Faktoren, welche Zuordnung zu einem Grad der Asymmetrie der Sitzhaltung bedeuten, analog zu Figur 5b, dargestellt.

| Spalte | Bereich von S1 | Bereich von S1 | Sitzhaltung |
|---|---|---|---|
| 1 | S1 < 1,15 * S2 und S1 > 0,85 * S2 | S1= [0,85*S2, 1,15*S2] | Optimale Sitzhaltung |
| 2 | S1 < 1,3 * S2 und S1 > 1,15 * S2 | S1 = [1,15*S2, 1,3*S2] | Moderate Asymmetrie rechts |
| 3 | S1 < 0,85 * S2 und S1 > 0,7 * S2 | S1= [0, 7*S2, 0,85*S2] | Moderate Asymmetrie links |
| 4 | S1 > 1,3 * S2 | | stark ausgebildete Asymmetrie rechts |
| 5 | S1 < 0,7 * S2 | | stark ausgebildete Asymmetrie links |

Ein analoges Prinzip mit ähnlichen Bereichen beziehungsweise Faktoren kann hinsichtlich einer Vorne-Hinten Asymmetrie angewendet werden.

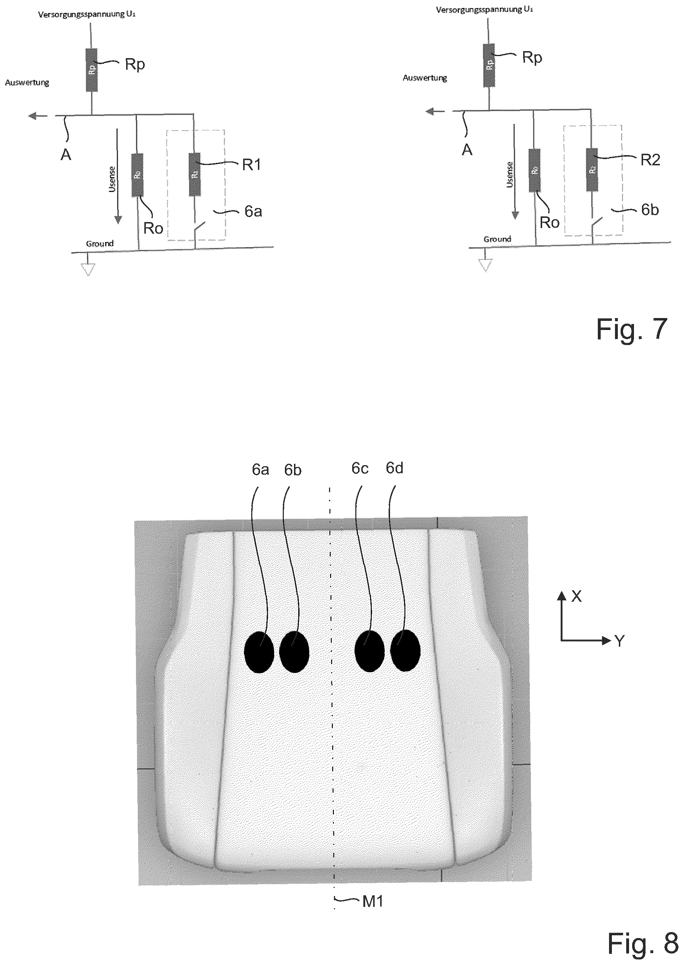

In Figur 7 ist eine mögliche Ausgestaltung von Sensorschaltkreisen des ersten Sensors 6a und des zweiten Sensors 6b dargestellt. Hierbei wird der elektrische Parameter in Form eines elektrischen Widerstands ausgewertet. Durch die Änderung der Druckkraftbeaufschlagung des ersten Sensors 6a oder zweiten Sensors 6b ändert sich dessen Widerstandswert R1 beziehungsweise R2. Die beiden Widerstände R1 und R2 sind jeweils parallel zu einem Widerstand R0 geschaltet. Die Parallelschaltung zwischen dem Widerstand R0 und dem Widerstand R1 beziehungsweise R2 ist in Reihe mit einem Vorwiderstand Rp geschalten. Zwischen dem Vorwiderstand Rp und der Parallelschaltung der Widerstände R0 und R1 beziehungsweise R2 wird das jeweilige Ausgabesignal am Abgriff A abgegriffen. Schließlich sind die Widerstände R0 und R1 beziehungsweise R2 auf mit Masse verbunden.

Bei einer derartigen Zweikanal-Auslesung wird der erste Sensor 6a im Vergleich zu dem zweiten Sensor 6b ausgewertet, werden die Widerstände R1 beziehungsweise R2 zueinander vergleichend ausgewertet. Das kann beispielsweise über die jeweiligen Spannungen U Sense, welche an den Abgriffen A abgegriffen wird, erfolgen. Der Widerstand R1, R2 der Sensoren 6a, 6b ist in der Ausführungsform variabel je nach Belastung und Flächenausführung des Sensors 6a, 6b. Geringe Belastung führt zu einem höherem Widerstand R1, R2. Bei ausreichender Belastung ist der Widerstand R1, R2 in einem Bereich der in einer Ausführungsform >200 Ohm beträgt. Alternativ kann die Auswertung auch über einen konstanten Strom erfolgen, der durch die Widerstände R1, R2 fließt. Dabei wird anstelle der Versorgungsspannung und dem Vorwiderstand Rp eine Konstantstromquelle eingefügt. Somit kann dann eine sehr genaue Messung des Widerstands gemäß dem Ohm'schen Gesetz erfolgen. Denkbar wäre, dass weitere Widerstände in der Schaltung für eine Anpassung des Spannungsabfalls im Gesamtwiderstand, oder zu Diagnosezwecken eingefügt werden.

Neben der oben beschriebenen Zweikanal-Auslesung ist auch eine Ausführungsform mit einer digitalen 4-Kanal-Auslesung denkbar. Hierzu sind, wie in Figur 8 erkennbar 4 Sensoren 6a, 6b, 6c, 6d vorgesehen. Der erste Sensor 6a und der zweite Sensor 6b liegen nebeneinander auf einer ersten (rechten) Seite der ersten Mittelachse M1. Der dritte Sensor 6c und der vierte Sensor 6d liegen nebeneinander auf einer zweiten (linken) Seite der ersten Mittelachse M1: Die Anordnung des ersten Sensors 6a und des zweiten Sensors 6b ist symmetrisch zu der Anordnung des dritten Senors 6s und des vierten Sensors 6d. Die Positionierung der Sensoren 6a, 6b, 6c, 6d entspricht der Positionierung von Sitzbeinhöckern des Insassen 15 nach 50. Perzentil männlich.

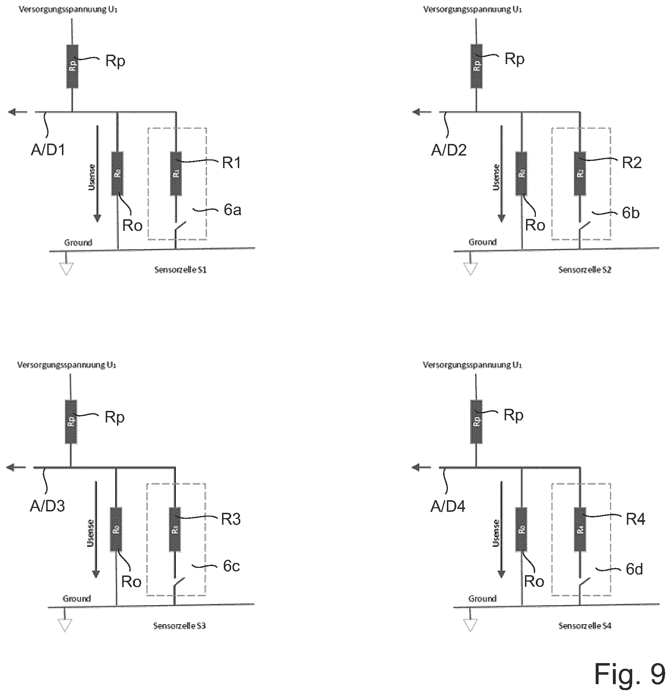

In Figur 9 sind entsprechende Ausgestaltungen der Sensorschaltkreise der vier Sensoren 6a, 6b, 6c,6d gezeigt. Diese entsprechen der Beschreibung Figur 7. Somit wird auf die entsprechende Beschreibung zu Figur 7 verwiesen. Die vier Sensoren 6a, 6b, 6c, 6d umfassen einen Widerstand R1, bzw. R2, bzw. R3 bzw. R4. Die Widerstände R1, bzw. R2, bzw. R3 bzw. R4 sind parallelgeschalteten mit einem Widerstand R0. Weiterhin ist ein Vorwiderstand Rp in Reihe zu dieser Parallelschaltung geschalten. Zwischen dem Vorwiderstand Rp und der Parallelschaltung ist ein Abgriff A/D1 bzw. A/D2 bzw. A/D3 bzw. A/D4 vorgesehen.

Die Sensorspannungen U sens werden an den Abgriff A/D1 bzw. A/D2 bzw. A/D3 bzw. A/D4 abgegriffen und an einem analog/digital (A/D)-Eingang der Steuerungseinrichtung 8 zugeführt. Die jeweiligen Sensorspannungen U sens werden somit logisch bzw. digital ausgewertet. D.h. die jeweiligen Sensorspannungen U sens mit einem Schaltschwellwert verglichen und dann entsprechend einem binären Zustand 0 oder 1 zugeordnet. Derartige digitale Schaltungen sind bekannt. Beispielsweise könnte eine Schmitt-Trigger-Schaltung oder ein ähnlicher Analog-DigitalWandler verwendet werden. Ist kein Sensor 6a, 6b, 6c, 6d betätigt fällt die Spannung nur über dem jeweiligen Widerstand R0 ab. Dies entspricht dem logischen Zustand "0". Bei Betätigung fällt die jeweilige Spannung an dem Gesamtwiderstand R0//Rx (Rx = R1 oder R2 oder R3 oder R4) ab. Dies entspricht dem logischen Zustand "1".

Im Folgenden ist eine Tabelle aufgezeigt, welche wieder den Spalten der Anzeige in Figur 5b zugeordnet werden kann. Die Ausgabesignale sind dabei logische Signale und können einen Wert "0=" oder "1" annehmen. Dabei haben der erste Sensor 6a aus Figur 8 das Ausgabesignal S1, der zweite Sensor 6b aus Figur 8 das Ausgabesignal S2, der dritte Sensor 6c aus Figur 8 das Ausgabesignal S3 und der vierte Sensor 6d aus Figur 8 das Ausgabesignal S4. Haben alle Ausgabesignale S1 bis S4 den Wert "1" sind alle 4 Sensoren gänzlich belegt. Bei einer moderaten Asymmetrie ist jeweils ein äußerer Sensor 6a oder 6d einer jeweiligen Seite (rechts, links) nicht vollständig belegt und geben somit den logischen Wert "0". Die jeweils innen liegenden Sensoren 6b, 6c sind dabei jedoch ausreichend belegt und liefern somit den logischen Wert "1". Bei der starken Asymmetrie sind jeweils die Sensoren einer Seite (recht, links) 6a, 6b oder 6c, 6d nicht gänzlich belegt. Diese Sensoren liefern somit den logischen Wert "0". Dies Sensoren der gegenüberliegenden Seite liefern demnach den Wert "1".

| Spalte | Bereich von S1 | Sitzhaltung |
|---|---|---|
| 1 | S1=1 und S2=1 und S3=1 und S4=1 | Optimale Sitzhaltung |
| 2 | S1=1 und S2=1 und S3=1 und S4=0 | Moderate Asymmetrie rechts |
| 3 | S1=0 und S2=1 und S3=1 und S4=1 | Moderate Asymmetrie links |
| 4 | S1=1 und S2=1 und S3=0 und S4=0 | stark ausgebildete Asymmetrie rechts |
| 5 | S1=0 und S2=0 und S3=1 und S4=1 | stark ausgebildete Asymmetrie links |

Das System 1 kann auch dazu bestimmt und eingerichtet sein, eine Belegung des Fahrzeugsitzes zu erkennen. Die Steuerungseinrichtung 8 gibt ein Sitzbelegungssignal aus, wenn ein Ausgabesignal zumindest eines der in dem Sitzteil angeordneten Sensoren 6a, 6b einen Schwellwert übersteigt oder unterschreitet. Denkbar wäre, dass zwei Sensorkreise vorgesehen sind. Ein erster Sensorkreis zur Detektion der Sitzhaltung und ein zweiter Sensorkreis zur Detektion einer Sitzbelegung. Denkbar wäre jedoch auch, dass lediglich ein Sensorkreis vorgesehen ist, mittels welchem sowohl die Sitzhaltung als auch die Sitzbelegung detektierbar ist.

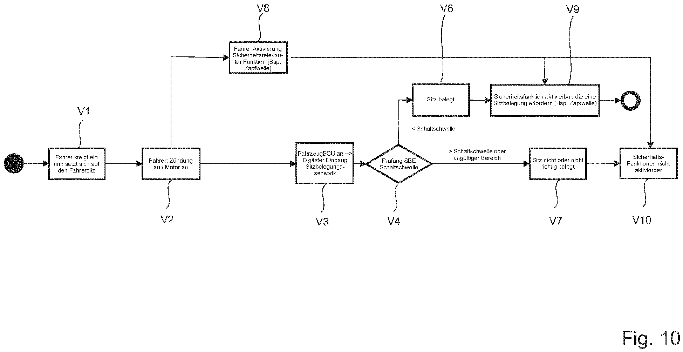

In Figur 10 ist ein Verfahren zum Betrieb eines Fahrzeugs gezeigt, welches lediglich eine Sitzbelegungserkennung umfasst. In Schritt V1 steigt der Fahrer ein und setzt sich auf den Fahrersitz. In Schritt V2 stellt der Fahrer (Insasse 15) die Zündung beziehungsweise den Motor an. In Schritt V3 wird die Steuerungseinrichtung 8 (ECU) des Fahrzeugs aktiviert und die Sitzbelegungssensorik abgefragt. Es wird somit das Ausgabesignal einer ersten Sensoreinrichtung 6 abgefragt. In Schritt V4 prüft die zumindest eine Steuerungseinrichtung 8 nun, ob ein vorgegebener Schwellwert überschritten oder unterschritten ist. Ein Überschreiten oder Unterschreiten eines solchen Schwellwert kann als Sitzbelegung interpretiert werden. Je nach Sensorart beziehungsweise Art der Sensorschaltung wird ein Überschreiten oder ein Unterschreiten als Indikator verwendet. Wird eine Sitzbelegung erkannt, befindet sich das Verfahren in dem Zweig V6. Wird erkannt, dass der Sitz nicht oder nicht richtig belegt ist, befindet sich das Verfahren in dem Zweig V7. Aktiviert der Fahrer in Schritt V8 nun eine sicherheitsrelevante Funktion, beispielsweise die Zapfwelle, gibt für den Fall, dass sich das Verfahren in dem Zweig V6 befindet, in Schritt V9 die Steuerungseinrichtung die Sicherheitsfunktion frei. Befindet sich das Verfahren in dem Zweig V7 ist die Sicherheitsfunktion gemäß V10 nicht aktivierbar.

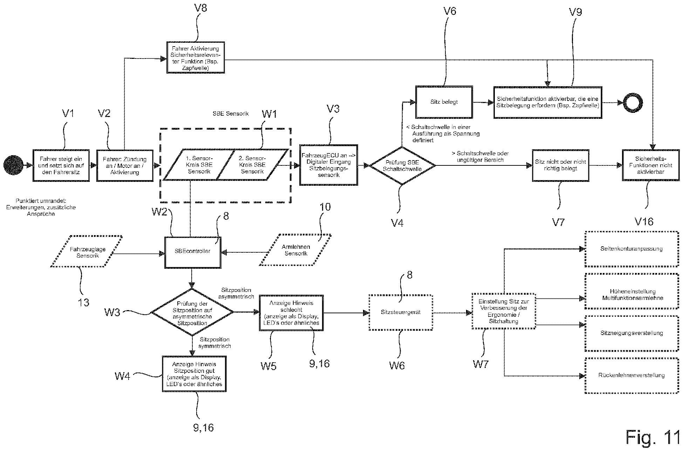

In Figur 11 ist ein Ablaufdiagramm dargestellt, welches ein weiteres Verfahren zum Betrieb eines Fahrzeugs, insbesondere eines Nutzfahrzeugs, zeigt. In diesem weiteren Verfahren ist die Sitzbelegungserkennung kombiniert mit der Erkennung einer Sitzhaltung. Die Sitzbelegungserkennung gemäß den Schritten V1 bis V10 ist in diesem Verfahren identisch zu dem Verfahren gemäß dem Ablaufdiagramm in Figur V10. In diesem weiteren Verfahren sind jedoch 2 Sensorkreise vorgesehen zum einen ein erster Sensorkreis zur Erkennung einer Sitzhaltung und weiterhin ein zweiter Sensorkreis zur Erkennung der Sitzbelegung. Dieses ist in Schritt W1, welcher nach Schritt V2 folg dargestellt. In W2 wird die Steuerungseinrichtung 8, welche zur Detektion der Sitzhaltung vorgesehen ist, aktiviert. Diese Steuerungseinrichtung 8 kann die gleiche Steuerungseinrichtung 8 wie diejenige zur Sitzbelegungserkennung sein. Eine solche Steuerungseinrichtung 8 ist üblicherweise im Fahrzeug oder im Fahrzeugsitz vorgesehen. Es ist jedoch auch möglich, dass die Steuerungseinrichtung 8 zur Detektion der Sitzhaltung im Fahrzeugsitz angeordnet ist und die Steuerungseinrichtung 8 zur Sitzbelegungserkennung im Fahrzeug angeordnet ist.

In Schritt W3 prüft die Steuerungseinrichtung 8 die die Sitzdruckverteilung auf der Sitzfläche wie oben ausgeführt zur Bestimmung der Sitzhaltung. Es werden somit die Ausgabesignale der zumindest 2 Sensoren 6a, 6b der ersten Sensoreinrichtung ausgewertet. Führt die Prüfung dazu, dass die Sitzhaltung symmetrisch ist, wird dies mittels der Ausgabeeinrichtung 9 beziehungsweise der Anzeigeeinrichtung 16 ausgegeben. Wird eine asymmetrische Sitzdruckverteilung beziehungsweise eine asymmetrische Sitzhaltung festgestellt, wird in Schritt W5 dies ebenso mittels der Ausgabeeinrichtung 9 beziehungsweise der Anzeigeeinrichtung 16 ausgegeben. Optional kann in Schritt W6 ein Sitzsteuergerät beziehungsweise ein Aktuator 10 angesteuert werden. In Schritt W7 kann eine automatische Einstellung von Sitzparametern zur Verbesserung der Ergonomie oder Sitzhaltung erfolgen. Dies kann eine oder mehrere Einstellungen, wie in Figur 11 dargestellt, umfassen. Derartige Einstellungen sind beispielsweise eine Seitenkonturanpassung und/oder eine Höheneinstellung der Multifunktionsarmlehne und/oder eine Einstellung der Sitzneigung und/oder eine Rückenlehnenverstellung.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: System
- 2: Fahrzeugsitz
- 3: Sitzfläche
- 4: Sitzteil
- 5: Rückenlehne
- 6: Sensoreinrichtung
- 6a: erster Sensor
- 6b: zweiter Sensor
- 6c: dritter Sensor
- 6d: vierter Sensor
- 7: Sitzteil
- 8: Steuerungseinrichtung
- 9: Ausgabeeinrichtung
- 10: Aktuator
- 11: Sensor
- 12: Sensor
- 13: zweite Sensoreinrichtung
- 14: Armlehne
- 15: Insasse
- 16: Anzeigeeinrichtung
- 16a: mittlerer Bereich der Anzeigeeinrichtung
- 16b: außenliegender Bereich der Anzeigeeinrichtung
- 16c: außenliegender Bereich der Anzeigeeinrichtung
- 16d: Übergangsbereich der Anzeigeeinrichtung
- 16e: Übergangsbereich der Anzeigeeinrichtung
- M1: erste Mittelachse
- M2: zweite Mittelachse
- X: Längsachse
- Y: Breitenachse
- Z: Höhenachse

## Patentansprüche

1. System (1) zur Detektion einer Sitzhaltung eines Insassen (15) in einem Fahrzeugsitz (2), umfassend einen Fahrzeugsitz (2) mit einem eine Sitzfläche (3) umfassenden Sitzteil (4) und einer Rückenlehne (5),
**dadurch gekennzeichnet, dass**
zumindest eine erste Sensoreinrichtung (6) vorgesehen ist, welche zumindest zwei in dem Sitzteil (7) angeordnete Sensoren (6a, 6b) umfasst, wobei zumindest eine Steuerungseinrichtung (8) dazu bestimmt und eingerichtet ist, Ausgabesignale der zumindest zwei Sensoren (6a, 6b) hinsichtlich einer asymmetrischen, durch einen Insassen (15) wirkenden Sitzdruckverteilung auf der Sitzfläche (3) auszuwerten.

2. System (1) nach Anspruch 1,
**dadurch gekennzeichnet, dass**
das System eine Ausgabeeinrichtung (9) umfasst, welche ein Ausgabe bezüglich der Sitzhaltung eines Insassen (15) des Fahrzeugsitzes (2) bereitstellt, wobei die Ausgabe eine visuelle Ausgabe und/oder eine akustische Ausgabe und/oder eine haptische Ausgabe ist.

3. System (1) nach Anspruch 1 oder 2,
**dadurch gekennzeichnet, dass**
die zumindest zwei Sensoren (6a, 6b) Druckkraftsensoren sind, wobei sich bei einer Änderung einer auf den Sensor (6a, 6b) wirkenden Druckkraft ein elektrischer Parameter des Sensors (6a, 6b) ändert, wobei das Ausgabesignal der zumindest zwei Sensoren (6a, 6b) proportional zu dieser Änderung ist, wobei der elektrische Parameter ein elektrischer Widerstand und/oder eine Kapazität und/oder eine Induktivität ist.

4. System (1) nach einem der vorhergehenden Ansprüche,
**dadurch gekennzeichnet, dass**
die zumindest zwei Sensoren (6a, 6b) in einem Mattenelement integriert sind, wobei das Mattenelement innerhalb des Sitzteils (4) angeordnet ist.

5. System (1) nach einem der vorhergehenden Ansprüche,
**dadurch gekennzeichnet, dass**
der Fahrzeugsitz (2) zumindest eine Armlehne (14) umfasst, wobei die zumindest eine Sensoreinrichtung (6) zumindest einen Sensor (11) umfasst, welcher die Höhe der zumindest einen Armlehne (14) bestimmt und/oder zumindest einen Sensor (12) umfasst, welcher in der Rückenlehne (5) angeordnet ist.

6. System (1) nach einem der vorhergehenden Ansprüche,
**dadurch gekennzeichnet, dass**
nach Detektion einer asymmetrischen Sitzhaltung die zumindest eine Steuerungseinrichtung (8) zumindest einen Aktuator (10) ansteuert, wobei die Steuerungseinrichtung (8) den zumindest einen Aktor (10) derart ansteuert, dass die Sitzhaltung des Insassen (15) verbessert wird.

7. System (1) nach einem der vorhergehenden Ansprüche,
**dadurch gekennzeichnet, dass**
das System (1) dazu bestimmt und eingerichtet ist, eine Belegung des Fahrzeugsitzes zu erkennen, wobei die Steuerungseinrichtung (8) eine Sitzbelegungssignal ausgibt, wenn ein Ausgabesignal zumindest eines der in dem Sitzteil angeordneten Sensoren (6a, 6b) einen Schwellwert übersteigt.

8. System (1) nach einem der vorhergehenden Ansprüche,
**dadurch gekennzeichnet, dass**
eine zweite Sensoreinrichtung (13) vorgesehen ist, mittels welcher die Neigung des Fahrzeugs bestimmbar ist, wobei bei Überschreiten oder Unterschreiten eines Schwellwerts bezüglich der Neigung des Fahrzeugs keine Ausgabe hinsichtlich einer asymmetrischen Sitzhaltung erfolgt.

9. System (1) nach einem der vorhergehenden Ansprüche,
**dadurch gekennzeichnet, dass**
das Sitzteil (4) eine Erstreckung entlang einer Breitenachse (Y) aufweist, wobei die zumindest zwei Sensoren (6a, 6b) derart angeordnet sind, dass diese einen vorbestimmten Abstand entlang der Breitenachse (Y) aufweisen.

10. System (1) nach Anspruch 9,
**dadurch gekennzeichnet, dass**
das Sitzteil (4) entlang einer Breitenachse (Y) eine erste Mittelachse (M1) aufweist ,wobei eine erste Teilmenge an Sensoren (6a, 6b) der ersten Sensoreinrichtung auf einer ersten Seite der ersten Mittelachse (M1) angeordnet ist, wobei eine zweite Teilmenge an Sensoren (6a, 6b) der ersten Sensoreinrichtung auf einer zweiten Seite der ersten Mittelachse (M1) angeordnet ist, wobei die erste Teilmenge und die zweite Teilmenge symmetrisch bezüglich der ersten Mittelachse (M1) angeordnet sind.

11. System (1) nach einem der vorhergehenden Ansprüche,
**dadurch gekennzeichnet, dass**
das Sitzteil (4) eine Erstreckung entlang einer Längsachse (X) aufweist, wobei das Sitzteil (4) entlang einer Längsachse (X) eine zweite Mittelachse (M2) aufweist, wobei eine dritte Teilmenge an Sensoren (6a, 6b) der ersten Sensoreinrichtung auf einer ersten Seite der zweiten Mittelachse (M2) angeordnet ist, wobei eine vierte Teilmenge an Sensoren (6a, 6b) der ersten Sensoreinrichtung auf einer zweiten Seite der zweiten Mittelachse (M2) angeordnet ist, wobei die dritte Teilmenge und die vierte Teilmenge symmetrisch bezüglich der zweiten Mittelachse (M2) angeordnet sind.

12. System (1) nach einem der vorhergehenden Ansprüche,
**dadurch gekennzeichnet, dass**
die erste Teilmenge und die dritte Teilmenge zumindest einen gemeinsamen Sensor (6a, 6b) aufweisen, wobei die erste Teilmenge und die vierte Teilmenge zumindest einen gemeinsamen Sensor (6a, 6b) aufweisen, wobei die zweite Teilmenge und die dritte Teilmenge zumindest einen gemeinsamen Sensor (6a, 6b) aufweisen, wobei die zweite Teilmenge und die vierte Teilmenge zumindest einen gemeinsamen Sensor (6a, 6b) aufweisen.

13. Fahrzeug insbesondere ein Nutzfahrzeug mit einem System (1) nach einem der vorhergehenden Ansprüche.
